# EUROPEAN PATENT SPECIFICATION

(11) **EP 3 047 223 B1**
(45) Date of publication and mention of the grant of the patent: **06.11.2019**
(21) Application number: 14781319.0
(22) Date of filing: 10.09.2014
(51) Int. Cl.: F28D 9/00

(54) **HEAT EXCHANGER WITH IMPROVED CONFIGURATION**
WÄRMETAUSCHER MIT VERBESSERTER KONFIGURATION
ÉCHANGEUR DE CHALEUR AYANT UNE CONFIGURATION AMÉLIORÉE

(30) Priority: 17.09.2013 NL 2011454
(43) Date of publication of application: 27.07.2016
(73) Proprietor: Level Holding B.V., 5691 GD Son (NL)
(72) Inventor: VELTKAMP, Wessel Bart, NL-5691 GD Son (NL)
(74) Representative: Patentwerk B.V.
(86) International application number: PCT/NL2014/050618
(87) International publication number: WO 2015/041518

(56) References cited:
- WO-A1-2011/092445
- DE-A1- 10 213 543
- DE-A1- 10 329 153
- DE-A1-102004 055 550
- DE-C1- 19 635 552
- FR-A- 1 245 012
- GB-A- 2 158 569
- US-A- 4 411 310

## Description

The invention relates to a heat exchanger comprising a number of sheets stacked onto each other and extending mutually parallel, wherein at least some of the number of sheets are provided over at least a part of their surface with profiles which form ducts extending between the sheets and the ducts present on either side of a sheet extend parallel, wherein the profiles have upper and lower walls extending parallel to the main plane of the sheets, wherein each of the sheets lies adjacent on one of its sides to ducts of a first type and lies adjacent on its other side to ducts of a second type, wherein adjoining sheets stacked onto each other are mutually connected at their edges extending parallel to the ducts, wherein all sheets are provided with a profile and the profile of each sheet extends over the whole surface of the heat exchanger, wherein the average height of the ducts is greater than their average width, wherein the sheets are stacked with the lower walls of an upper-lying sheet above the upper walls of the underlying sheet and wherein the profile arrangement in the sheets and forming the ducts has a form of a trapezium, repeating itself.

Such a heat exchanger is known from DE10329153.

Another heat exchanger is known from the European patent application EP-A-0 666 973. This prior art heat exchanger is provided with ducts of substantially triangular section. The flow resistance in the ducts of this heat exchanger is therefore considerable. This requires a relatively large amount of power from an air pump or a fan for the purpose of maintaining the required flow, thereby decreasing the total efficiency of the device of which the heat exchanger forms part. It seems attractive to extend two walls of the triangular ducts in order to enlarge the passage of the ducts without reducing the heat transfer. This results in a duct with a cross-section with an acute angle. Calculations have shown that the flow in the vicinity of the acute angle is negligible, so that with this modification the flow resistance decreases only a little relative to the prior art configuration.

WO-A-2013093375 further shows a heat exchanger comprising a number of sheets stacked onto each other and extending mutually parallel, wherein at least some of the number of sheets are provided over at least a part of their surface with profiles which form ducts extending between the sheets and wherein the ducts present on either side of a sheet extend parallel, wherein each of the sheets lies adjacent on one of its sides to ducts of the first type and lies adjacent on its other side to ducts of the second type, wherein adjoining sheets stacked onto each other are mutually connected at their edges extending parallel to the ducts, wherein all sheets are provided with a profile and the profile of each sheet extends over the whole surface of the heat exchanger, and wherein the average height of the ducts is greater than their average width. As a result of the greater height of the ducts the flow resistance is much lower than in the initially stated EP-A-0666 973.

The invention has for its object to provide such a heat exchanger avoiding these disadvantages while making the stacking of the sheets easier and increasing the stability of the heat exchanger.

This is achieved by a heat exchanger of the above stated type, wherein the sheets have a fold on both their upper and lower walls extending parallel to the main plane of the sheets, wherein the folds in the upper walls extend in the same direction as the folds in the lower walls and wherein the fold of an upper wall of an underlying sheets fits into the fold of a lower wall of an upperlying sheet.

It is noted here that the terms 'lower wall' and 'upper wall' relate to the situation in which the main plane of the sheets extends horizontally.

As a result of this measure the disadvantages of the prior art are avoided.

Substantially trapezium-shaped ducts can be embodied in two different configurations, i.e. with obtuse angles between the walls and with acute angles between the walls. If the configuration with obtuse angles is chosen, the walls extending parallel to the main plane are narrow between the inclining walls, while in the configuration with acute angles the walls extending parallel to the main plane are wide. Although the configuration with the obtuse angles is more attractive from the viewpoint of material use, it is nevertheless recommended to apply the configuration with the acute angles since the stackability of this latter configuration is better. According to a preferred embodiment, the angles between the walls of the ducts forming part of a single sheet are acute.

Tests have shown that the optimal flow resistance is obtained when the assembled ducts which are enclosed by two connecting sheets have a constriction in their centre, and the constriction of the ducts is smaller than 20% of the maximum width of the duct.

Preferably the sheets extend on a first and a second side, lying opposite the first side, of the heat exchanger to a position outside the heat exchanger, the parts of the sheets extending on respectively the first and second side of the heat exchanger form respectively a first and second coupling piece, the first coupling piece is configured to couple a first external duct to a first end of the ducts of the first type and to couple a second external duct to the first end of the ducts of the second type, and the second coupling piece is configured to couple a third external duct to the second end of the ducts of the first type and to couple a fourth external duct to the second end of the ducts of the second type. As in the prior art heat exchanger, use is hereby made of the fact that ducts of different types lie are located either side of each of the sheets. The sheets thus serve as separation between the ducts of the different types which can be continued into the coupling piece.

According to a further preferred embodiment, the sheets are formed from thermally deformable plastic sheets by means of a thermoforming process.

The present invention will now be elucidated with reference to the accompanying figures, in which:
Figure 1 is a schematic perspective view of a prior art heat exchanger;
Figure 2 is schematic perspective view of a sheet for a heat exchanger for use in a heat exchanger according to the invention;
Figure 3 is a schematic perspective view of a sheet for a heat exchanger according to a first embodiment of the invention;
Figure 4 is a schematic perspective view of a heat exchanger according to the first embodiment;
Figure 5 is a schematic perspective view of another heat exchanger;
Figure 6 is a cross-sectional view of a part of a sheet for a heat exchanger for use in a heat exchanger according to the invention;
Figure 7 is a view corresponding to figure 6 at different stages of manufacture;
Figure 8 is a cross-sectional view of a combination of a mould and a counter-mould;
Figure 9 is a first detail view of figure 8; and
Figure 10 is a second detail view of figure 8.

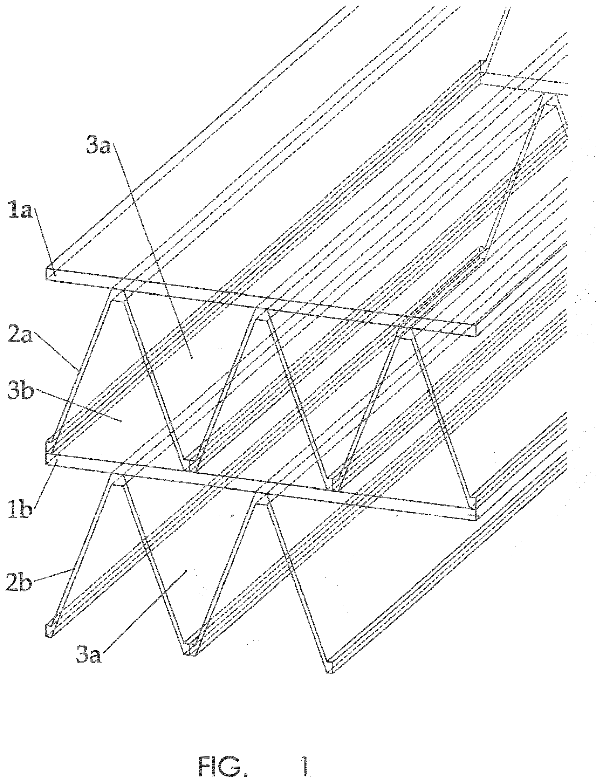

The prior art heat exchanger shown in figure 1 comprises a number of flat mutually parallel sheets, of which figure 1 shows two sheets 1a, 1b. Arranged between each of the two flat sheets 1 are sheets 2 formed in a triangular profile, two of which 2a, 2b are shown in figure 1. Ducts 3 with a substantially triangular section are formed between flat sheets 1 and the sheets 2 provided with a profile. The upper flat sheet 1a and the upper sheet 2a provided with a profile here enclose ducts 3a of the first type, and the lower flat sheet 1b and the upper sheet 2a provided with a profile enclose ducts 3b of the second type. The lower flat sheet 1b and the lower sheet 2b provided with a profile further enclose ducts 3a of the first type. Each of the sheets 1, 2 thus lies adjacent on either side to ducts of different type. As already noted, ducts 3 each have substantially the cross-section of an equilateral triangle.

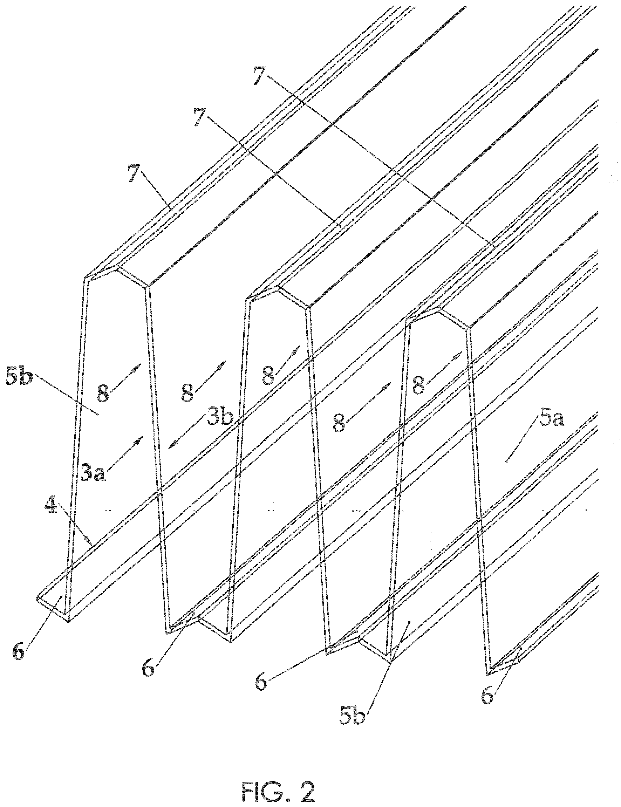

The schematic view shown in figure 2 of a sheet 4 provided with a profile shows the multiple trapezium profile of sheet 4. The profile comprises inclining side walls 5a, 5b, upper walls 7 and lower walls 6, wherein the upper and lower walls 6, 7 extend in the main direction of sheet 4 and the inclining side walls 5 extend at an acute angle to the upper and lower walls 6, 7. Ducts 8 with a trapezium-shaped section are hereby formed, which are open on their underside or their upper side and thus have to be closed by another sheet. As a result of this acute angle the upper and lower walls 6, 7 are wide, which provides the option of stacking the thus formed sheets 4 without interposing flat sheets as in the prior art. The flow resistance of ducts 8 with a trapezium-shaped section has further been found to be considerably lower than that of the prior art triangular ducts 3.

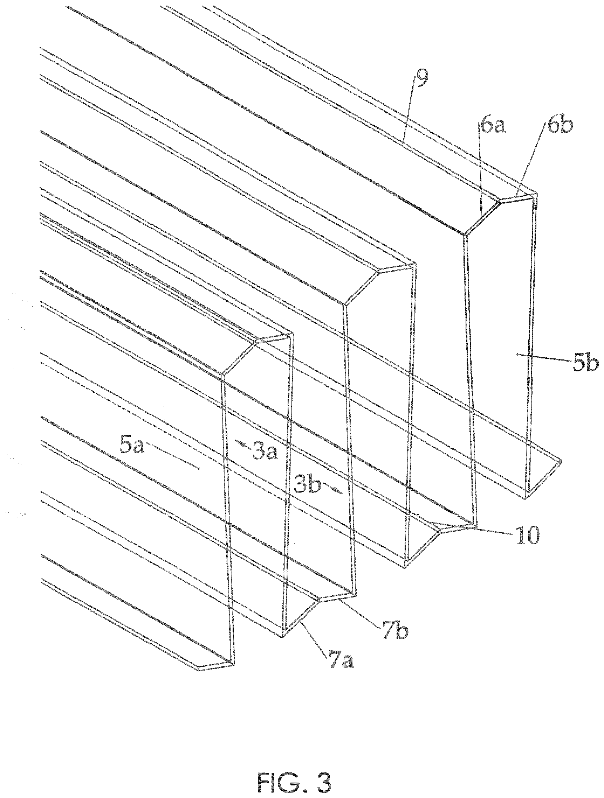

As already elucidated above, use is usually made of thermoforming for the purpose of arranging the profile in the sheets. A sheet is placed here on a mould provided with the desired profile, the sheet is heated and the sheet is urged against the mould by means of a difference in air pressure, so that the sheet deformable by means of heating takes on the shape of the mould. After shaping of the sheet it is allowed to cool, after which it retains its shape. The current trapezium shape makes it difficult to remove the formed sheet from the mould, since the combination is not self-releasing. In order to nevertheless be able to remove the sheet from the mould, the upper wall of the sheet is provided with a fold. Such a sheet provided with a fold is shown in figure 3. Upper wall 6 is divided into two equal parts 6a and 6b by fold 9. During removal of the sheet from the mould the upper wall can fold at the fold so that the part protruding into the cavity of the mould can be made narrower and can be removed from the mould.

In figure 3 lower wall 7 is also provided with a fold 10 which divides lower wall 7 into two equal parts 7a and 7b. This fold has no function in the removal of the formed sheet from the mould, but fold 10 does have a function during stacking, as will be elucidated below.

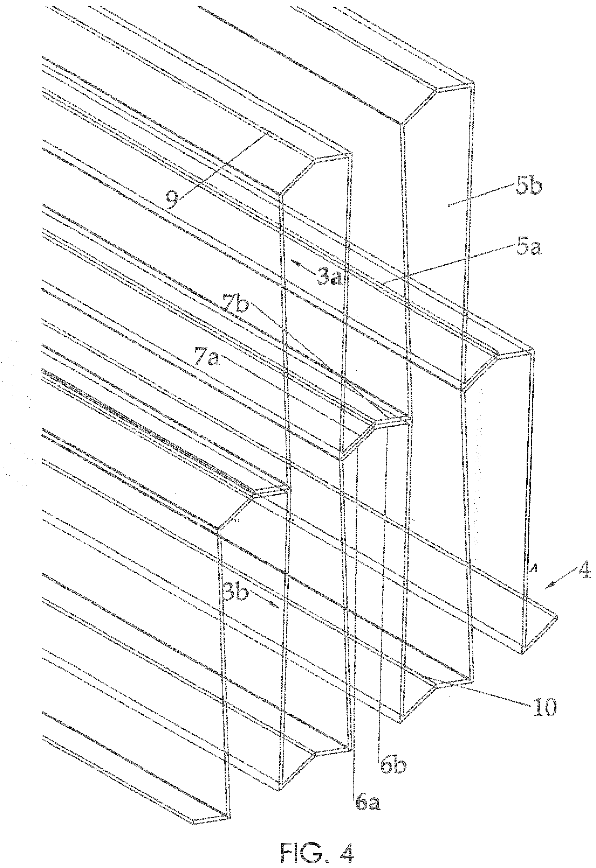

It is possible to stack the thus formed sheet 4 in two different ways. The first stacking method is shown in figure 4. The sheets are stacked with the lower wall of the duct of an upper-lying sheet above the upper wall of the ducts of the underlying sheet. The result thereof is that assembled ducts are obtained with a height double that of the ducts in a single sheet. A significant advantage of this embodiment is that lower wall 7 of upper-lying sheet 4 rests on the single upper wall 6 of underlying sheet 4, wherein both sheets are provided with a fold which makes the relevant walls fit into each other, whereby the sheets are mutually fixed. It is noted here that folds 9, 10 in lower and upper walls 6, 7 do have to point in the same direction in order to achieve this effect. The relatively great height of the assembled duct 3 only has the effect that thermal energy is exchanged via the side walls. Since the upper and lower walls 6, 7 are quite narrow, this is only a small drawback. It is noted that in the shown embodiment the sheets have a profile in the form of an acute-angled trapezium, which has the result that the section of the combined duct is constricted. Not precluded however is that the profile of the sheets is obtuse-angled and the assembled duct widens in the centre. When the assembled profile narrows in the centre it is then recommended that the width of the duct is about 80% of the maximum width of the duct.

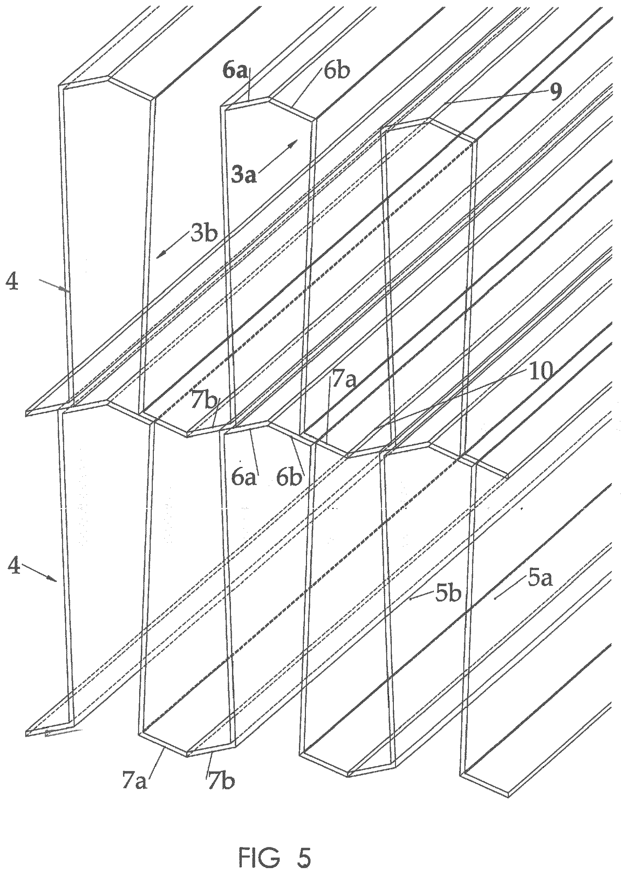

This latter stated drawback is however avoided when the upper walls of the ducts of sheets lying immediately above each other are located straight above one another, as shown in figure 5. Lower wall 7 of the upper-lying sheet rests here on two different upper walls 6 of the underlying sheet. A part of the half 7a of lower wall 7 more particularly rests on a part of the half 6b of upper wall 6 of the underlying sheet, and a part of the other half 7b of the same lower wall 7 lies on a part of the half 6a of another upper wall 6 of the underlying sheet. Some of the number of ducts 3 are bounded here on their upper side by those parts of lower wall 7 of upper-lying sheet 4 which are not supported by an upper wall 6 of the sheet in which duct 3 extends. Other ducts 3 are bounded on their underside by those parts of upper wall 6 of underlying sheet 4 which do not function as support for the lower wall of sheet 4 in which ducts 3 extend. Another difference from the stacking shown in figure 4 is the fact that the folds 9, 10 in the lower and upper surfaces 6, 7 are directed outward in order to obtain the required stability of the stacking; in the stacking method shown in figure 3 the fold 10 in lower surface 7 is directed inward and the fold 9 in upper surface 6 is directed outward.

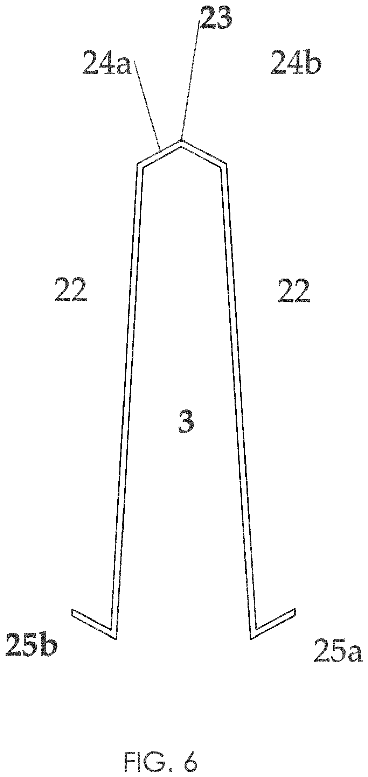

Figure 6 shows a cross-section of a profile of a sheet 4 as currently envisaged; this relates particularly to the ratio between height and width of duct 3. The ratio of the average height and the average width of the profile is 4.25, although it is likewise possible to apply other ratios in the range between 4 and 5 or between 3 and 6. The ratio of the widest part of the duct and the narrowest part amounts to about 1.2, although it is likewise possible to make use of other ratios between 1.1 and 1.4 or between 1.05 and 1.5.

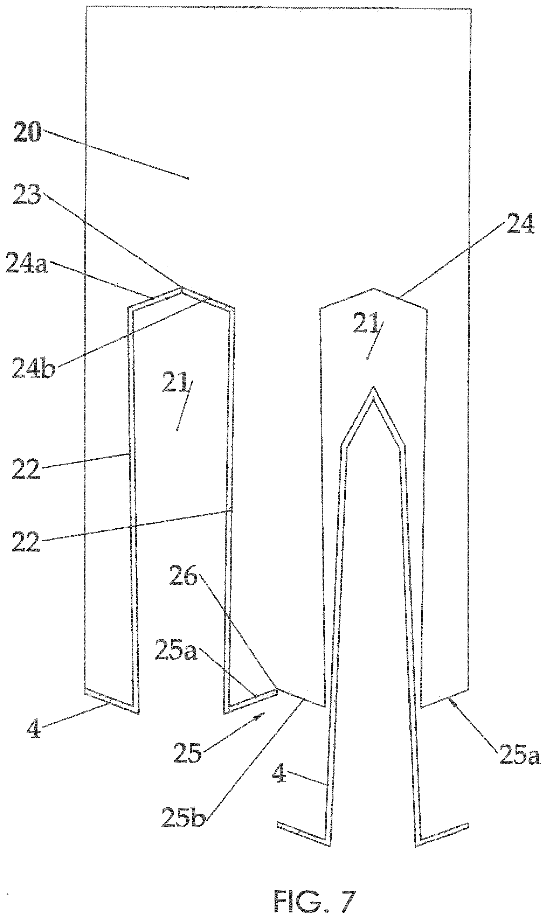

Figure 7 shows a cross-section of a mould 20 applied for the purpose of arranging the profile in the sheets. The mould is provided for this purpose with a number of grooves 21, the profile of which corresponds to the profile of the ducts to be formed in the sheet. The grooves are provided with side walls 22 tapering to the outside and with an end wall 24 divided into two parts 24a, 24b by a fold 23. Formed between grooves 21 are intermediate surfaces 25 which are divided into two parts 25a, 25b by a fold 26. Although this is not essential per se, the grooves and intermediate surfaces preferably take a symmetrical form.

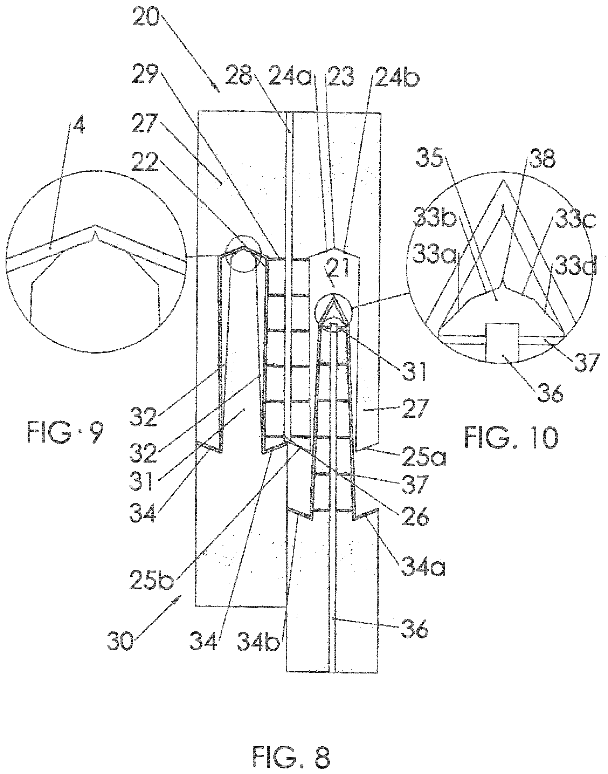

Figure 8 shows a cross-section of mould 20 in combination with a counter-mould 30. Counter-mould 30 is provided with elongate protrusions 31 which can move into grooves 21 of mould 20. Protrusions 31 are provided with two outward tapering side walls 32 ending in a head part provided with four end surfaces 33a, 33b, 33c and 33d. Also arranged in intermediate surfaces 34 between protrusions 31 is a fold 35 which divides intermediate surfaces 34 into two equal parts 34a and 34b. Because side walls 32 of protrusions 31 and side walls 22 of grooves 21 taper in opposite direction, space which is used during the thermoforming is created between grooves 21 and protrusions 31 when protrusions 31 are moved into grooves 21.

As already elucidated, use is made during thermoforming of a medium such as air. For feed and discharge of air use is made of air ducts arranged in mould 20 or in counter-mould 30. In the mould a main air duct 28 extending transversely of the main plane of the mould and of the sheet to be formed is arranged in each of the parts 27 between grooves 21, which air duct is provided with a number of side air ducts 29 debouching in side walls 22 of grooves 21. In counter-mould 30 a main air duct 36 extending transversely of the main plane of the mould is arranged in each of the protrusions, from which air duct branch off a number of side air ducts 37 which debouch in side walls 32. The main air ducts 28, 36 are each connected to a pump not shown in the drawing.

The operation of the thermoforming device comprising mould 20 and counter-mould 30 will now be elucidated. Mould 20 and counter-mould 30 are initially moved apart and the sheet 4 to be deformed is placed between mould 20 and counter-mould 30. Sheet 4 is heated prior to placing, although it is likewise possible for sheet 4 to be heated between mould 20 and counter-mould 30. Preferably heated air is then carried against sheet 4 from the side air ducts 37 arranged in counter-mould 30. Sheet 4 is hereby heated further and the sheet is pressed against mould 20, wherein sheet 4 is made deformable owing to its high temperature and takes on the shape of mould 20. This process is enhanced by the movement of counter-mould 30 toward mould 20, whereby protrusions 31 of counter-mould 30 urge sheet 4 further into grooves 21. This process is continued until protrusions 31 of counter-mould 30 extend wholly into grooves 21 and the air exiting side air ducts 37 urges sheet 4 against walls 22, 23 of grooves 21 and sheet 4 obtains the desired shape.

In order to fix the shape of sheet 4 the whole assembly of mould 20, sheet 4 and counter-mould 30 is cooled by per se known thermal ducts (not shown in the drawing) which are present in mould 20 and counter-mould 30 and with which the mould and the counter-mould can also be heated.

Once the cooling process has been completed, counter-mould 30 is once again moved away from mould 20 and air is blown from side air ducts 29 into mould 20, which air presses toward each other the side walls 5 formed during the process of forming ducts 3 in sheets 4 so that the shaped sheet 4 can be removed. Fold 9 in upper wall 6 of ducts 3 here facilitates movement toward each other of side walls 5 of ducts 3.

Figures 9 and 10 show the angle of protrusion 31 of counter-mould 30, i.e. the four-part end wall 33a, 33b, 33c and 33d thereof, in combination with a part of the deforming sheet 4 during the above elucidated process. Figure 9 shows here the situation in which protrusion 31 presses fold 9 of upper wall 6 into fold 23 of end wall 24 of groove 21. It can be seen how the two end surfaces 33b, 33c are in contact with the upper wall 6 of the profile formed from sheet 4. In the situation shown in figure 10 protrusion 31 of counter-mould 30 retracts from groove 21. Side walls 5 of duct 3 are urged here against protrusion 31 by the operation of side air ducts 29 in mould 20, whereby upper wall 6 folds more sharply than in the situation shown in figure 9, so that side walls 5 together with folded end wall 6 can be moved easily out of groove 21.

## Claims

1. Heat exchanger, comprising a number of sheets (1, 4) stacked onto each other and extending mutually parallel,
- wherein at least some of the number of sheets (4) are provided over at least a part of their surface with profiles which form ducts (8) extending between the sheets and wherein the ducts present on either side of a sheet extend parallel and wherein the profiles have upper and lower walls (6,7) extending parallel to the main plane of the sheets (1, 4);
- wherein each of the sheets (1, 4) lies adjacent on one of its sides to ducts (8) of a first type and lies adjacent on its other side to ducts (8) of a second type;
- wherein adjoining sheets (1, 4) stacked onto each other are mutually connected at their edges extending parallel to the ducts (8);
- wherein all sheets (4) are provided with a profile and the profile of each sheet (4) extends over the whole surface of the heat exchanger;
- wherein the average height of the ducts (8) is greater than their average width,
- wherein the sheets (4) are stacked with the lower walls (7) of an upper-lying sheet (4) above the upper walls (6) of the underlying sheet (4);
wherein the profile arrangement in the sheets (4) and forming the ducts (8) has a form of a trapezium, repeating itself,
**characterized in that** the sheets (4) have a fold (9, 10) on both their upper and lower walls (6, 7) extending parallel to the main plane of the sheets (1, 4), wherein the folds (9) in the upper walls (7) extend in the same direction as the folds (10) in the lower walls (7) and wherein the fold (9) of an upper wall (6) of an underlying sheets (4) fits into the fold (10) of a lower wall (7) of an upperlying sheet.

2. Heat exchanger as claimed in claim 1, **characterized in that** the angles between the side walls (5a, 5b) of the ducts (8) forming part of a single sheet (4) are acute.

3. Heat exchanger as claimed in claim 2, **characterized in that** the assembled ducts (8) which are enclosed by two connecting sheets (4) have a constriction in their centre, and that the constriction of the ducts is smaller than 20% of the maximum width of the duct.

4. Heat exchanger as claimed in any of the foregoing claims, **characterized in that** the sheets (1, 4) are manufactured from plastic sheets deformable by means of a thermoforming process.

## Patentansprüche

1. Wärmetauscher, der mehrere Platten (1, 4) umfasst, die aufeinandergestapelt sind und sich parallel zueinander erstrecken,
wobei zumindest einige der mehreren Platten (4) über zumindest einen Teil ihrer Fläche mit Profilen versehen sind, die Kanäle (8) bilden, die sich zwischen den Platten erstrecken, wobei sich die auf beiden Seiten einer Platte vorhandenen Kanäle parallel erstrecken und wobei die Profile obere und untere Wände (6, 7) aufweisen, die sich parallel zur Hauptebene der Platten (1 ,4) erstrecken;
wobei jede der Platten (1, 4) auf einer ihrer Seiten an Kanäle (8) einer ersten Art angrenzt und auf der anderen Seite an Kanäle (8) einer zweiten Art angrenzt;
wobei angrenzende, aufeinandergestapelte Platten (1, 4) an ihren Kanten, die sich parallel zu den Kanälen (8) erstrecken, miteinander verbunden sind;
wobei alle Platten (4) mit einem Profil versehen sind und sich das Profil jeder Platte (4) über die gesamte Fläche des Wärmetauschers erstreckt;
wobei die durchschnittliche Höhe der Kanäle (8) größer als ihre durchschnittliche Breite ist,
wobei die Platten (4) mit den unteren Wänden (7) einer darüber liegenden Platte (4) über den oberen Wänden (6) der darunterliegenden Platte (4) gestapelt sind;
wobei die Profilanordnung in den Platten (4) und die Form der Kanäle (8) eine sich wiederholende Trapezform aufweist,
**dadurch gekennzeichnet, dass** die Platten (4) sowohl auf ihrer oberen als auch unteren Wand (6, 7) einen Falz (9, 10) aufweisen, der sich parallel zur Hauptebene der Platten (1, 4) erstreckt, wobei sich die Falze (9) in den oberen Wänden (7) in dieselbe Richtung erstrecken wie die Falze (10) in den unteren Wänden (7) und wobei der Falz (9) einer oberen Wand (6) einer darunterliegenden Platte (4) in den Falz (10) einer unteren Wand (7) einer darüber liegenden Platte passt.

2. Wärmetauscher nach Anspruch 1, **dadurch gekennzeichnet, dass** die Winkel zwischen den Seitenwänden (5a, 5b) der Kanäle (8) die einen Teil einer einzelnen Platte (4) bilden, spitz sind.

3. Wärmetauscher nach Anspruch 2, **dadurch gekennzeichnet, dass** die montierten Kanäle (8), die von zwei verbundenen Platten (4) umschlossen werden, eine Verengung in der Mitte aufweisen und dass die Verengung der Kanäle kleiner als 20 % der Maximalbreite des Kanals ist.

4. Wärmetauscher nach einem der vorstehenden Ansprüche, **dadurch gekennzeichnet, dass** die Platten (1, 4) aus über einen Thermoformprozess verformbare Kunststoffplatten gefertigt sind.

## Revendications

1. Échangeur de chaleur, comprenant un certain nombre de feuilles (1, 4) empilées les unes sur les autres et s'étendant parallèlement les unes aux autres,
- dans lequel au moins une partie du nombre de feuilles (4) est dotée, sur au moins une partie de leur surface, de profils qui forment des canalisations (8) s'étendant entre les feuilles et dans lequel les canalisations présentes de chaque côté d'une feuille s'étendent parallèlement et dans lequel les profils ont des parois supérieure et inférieure (6, 7) s'étendant parallèlement au plan principal des feuilles (1, 4);
- dans lequel chacune des feuilles (1, 4) se trouve adjacente sur l'un de ses côtés à des canalisations (8) d'un premier type et se trouve adjacente sur son autre côté à des canalisations (8) d'un second type;
- dans lequel des feuilles contiguës (1, 4) empilées les unes sur les autres sont mutuellement raccordées au niveau de leurs bords s'étendant parallèlement aux canalisations (8);
- dans lequel toutes les feuilles (4) sont pourvues d'un profil et le profil de chaque feuille (4) s'étend sur la surface complète de l'échangeur de chaleur;
- dans lequel la hauteur moyenne des canalisations (8) est supérieure à leur largeur moyenne,
- dans lequel les feuilles (4) sont empilées avec les parois inférieures (7) d'une feuille superposée (4) au-dessus des parois supérieures (6) de la feuille sous-jacente (4);
dans lequel l'agencement de profil dans les feuilles (4) et formant les canalisations (8) a la forme d'un trapèze, se répétant,
**caractérisé en ce que** les feuilles (4) ont un pli (9, 10) sur leurs parois supérieure et inférieure (6, 7) s'étendant parallèlement au plan principal des feuilles (1, 4), dans lequel les plis (9) dans les parois supérieures (7) s'étendent dans la même direction que les plis (10) dans les parois inférieures (7) et dans lequel le pli (9) d'une paroi supérieure (6) des feuilles sous-jacentes (4) s'adapte à l'intérieur du pli (10) d'une paroi inférieure (7) de la feuille superposée.

2. Échangeur de chaleur selon la revendication 1, **caractérisé en ce que** les angles entre les parois latérales (5a, 5b) des canalisations (8) faisant partie d'une seule feuille (4) sont aigus.

3. Échangeur de chaleur selon la revendication 2, **caractérisé en ce que** les canalisations assemblées (8) qui sont entourées par deux feuilles de raccordement (4) présentent un rétrécissement en leur centre et **en ce que** le rétrécissement des canalisations est inférieur à 20% de la largeur maximale de la canalisation.

4. Échangeur de chaleur selon l'une quelconque des revendications précédentes, **caractérisé en ce que** les feuilles (1, 4) sont fabriquées à partir de feuilles en matière plastique déformables au moyen d'un procédé de thermoformage.
